# EUROPEAN PATENT SPECIFICATION

(11) **EP 4 180 247 B1**
(45) Date of publication and mention of the grant of the patent: **03.09.2025**
(21) Application number: 21208551.8
(22) Date of filing: 16.11.2021
(51) Int. Cl.: B60G 15/12, F16F 9/05, F16F 15/03

(54) **AIR SPRING - DAMPER FOR ACTIVE VEHICLE SUSPENSION**
LUFTFEDER - DÄMPFER FÜR EINE AKTIVE FAHRZEUGAUFHÄNGUNG
RESSORT PNEUMATIQUE - AMORTISSEUR POUR SUSPENSION ACTIVE DE VÉHICULE

(43) Date of publication of application: 17.05.2023
(73) Proprietor: Nio Technology (Anhui) Co., Ltd, Hefei City (CN)
(72) Inventor: HUBBARD, Steve, Oxford (GB); WILKINSON, Jack, Oxford (GB); ROGERS, David, Essex (GB)
(74) Representative: Vossius & Partner Patentanwälte Rechtsanwälte mbB

(56) References cited:
- JP-A- 2020 125 782
- JP-A- H10 292 847
- US-A1- 2010 117 318
- US-A1- 2020 238 780

## Description

### BACKGROUND OF THE INVENTION

The invention relates to an air spring-damper for active vehicle suspension. In particular, the present invention relates to an integrated device of an air spring member and a damper that is connected to the air spring member and comprises a linear motor.

The vehicle dynamics is affected by multiple technical configurations of a car. Among others, the suspension system, which partially determines the traction or the contact behavior between the road surface and the wheels, is considered highly important for safety, performance and drive comfort. The absorption and reduction of the vibrations and forces transmitted from the wheels to the vehicle body is one of the main technical functions of a vehicle suspension system. Ideally, the motion energy is dissipated as much as possible. In chassis engineering, a combination of hydraulic dampers to control spring motion and mechanical springs to absorb impacts is most commonly applied for conventional passive vehicle suspension. In contrast, an active vehicle suspension system using actuators to exert force on the suspension can directly improve the vehicle dynamics. However, the technical application is still considered to involve limitations, e.g., added complexity or high costs to realise an efficient active suspension system. There is a need for an improved active vehicle suspension to improve the overall performance of the vehicle. Devices for using an air spring member or a damper for active vehicle suspension are known where, e.g., an air spring is combined with a hydraulic damper. In a conventional air spring damper, the air spring comprises an air spring piston with a piston profile that engages with a rolling lobe. The air spring piston is positioned about the hydraulic damper. It is believed that further improvements in such devices would be desirable.

JP 2020 125782 A relates to an electromagnetic shock absorber. US 2020/238780 A1, which discloses the preamble of claim 1, relates to active shock absorbers/dampers that use an electro-magnetic actuator to provide a different magnitude of damping based on a frequency as well as a velocity of an input to the shock absorber/damper.

### SUMMARY OF THE INVENTION

The invention is defined by independent claim 1. Further embodiments of the invention are defined by the dependent claims.

It is an objective of the present invention to provide an improved active vehicle suspension. More specifically, it is an objective of the present invention to provide a device for using the combined effects of an air spring member and a damper that is connected to the air spring member and comprises a linear motor. A further objective of the invention may be seen in providing an air spring-damper with a reduce package size and/or an improved performance. Moreover, an objective of the invention may be seen in providing an air spring-damper with a faster response, a lower power consumption, and/or reduced manufacturing costs.

According to a first aspect of the present invention, an air spring-damper for active vehicle suspension comprises a first air spring member defining a first air spring volume and a damper connected to the first air spring member. The damper comprises a linear motor.

The air spring-damper may be configured to be installed between the body or frame of the vehicle and the wheel, more precisely, e.g., a hub carrier or control arm.

In other words, the air spring-damper may comprise an air spring comprising the first air spring-member and, preferably, further air spring members. Herein, the expression "air spring" shall encompass all air spring members of the air spring-damper.

The air spring, in particular the first air spring member, may employ the spring characteristic of an enclosed volume of pressurized air. The spring characteristic of the air spring, in particular the first air spring member, is influenced by the size of the volume and the pressure of the air within the volume. In other words, the air spring, in particular the first air spring member, may enclose the first air spring volume. The air spring, in particular the first air spring member, is configured to change its size. In other words, the air spring, in particular the first air spring member, is configured such that the air volume enclosed in the air spring, in particular the first air spring, volume enclosed or defined by the first air spring member, can be changed, e.g. when the air within the air is pressurized and/or the amount of air is changed (e.g., via an air feed).

Preferably, the air spring is a closed system, configured such that, apart from a controlled air feed, with which supply and/or release of air to/from the air spring can be controlled, the amount of air within the air spring does not change. For example, the air spring preferably does not comprise a continuous drain valve.

An air spring element has several advantages over a mechanical spring, such as soft response and adaptability of the spring characteristics, e.g., for height adjustments or different drive modes.

In other words, the damper is functionally connected to the first air spring member to damp vibrations of the air spring, in particular the first air spring member. As described further below, the damper can be configured to actively and/or passively damp vibrations of the air spring, in particular the first air spring member.

The expression "linear motor" is understood to refer to an electric motor where the moving part of the linear motor travels along a linear path with regard to the stationary part ("stator") of the linear motor, wherein the moving part and the stationary part of the linear motor electromagnetically interact with each other. Due to the similarities to rotating electric motors, the moving part is denoted as "rotor" and the stationary part of the electric motor is denoted as "stator". The stator has a linear extension. In other words, the linear motor can be seen as an electric motor where the stator and the rotor have been "unrolled". While the stator and/or the rotor of the linear motor do not form a loop, it is understood that the stator and the rotor do not need to be exactly straight. Preferably, the linear motor is configured such that the rotor travels along a straight line.

The damper comprising the linear motor can provide faster response and lower power consumption compared to hydraulic systems. The damper may use eddy currents to oppose the impact or vibration motion caused by the spring element. The damping characteristics of the damper can, preferably, be actively and accurately controlled.

The air spring member and the linear motor may be integrated in one air spring damper unit.

Nevertheless, the settings and the functions of each component, i.e. of the air spring and the damper, do not interfere with one another due to the connection between the damper and the first air spring member. The components can operate independently but also complement each other, e.g., any change in rate or position from the air spring can be compensated by the linear motor control. An active vehicle suspension can be achieved by using both technical components.

For example, the air spring member may surround and/or encircle at least a portion of the damper.

The integration of both technical components, i.e. the air spring and the damper comprising the linear motor, in an integrated or single device (i.e. air spring-damper), which operates without any detrimental effects to the individual functions of an air spring or electromagnetic damper, provides an improved mean for active vehicle suspension. Such air spring-damper can also be easily operable so that the operation of the active vehicle suspension can be performed consistently without a user intervention. Furthermore, such an air spring-damper can reduce the complexity of the spring-damper unit, which may enable an accurate and fail-safe operation. Moreover, such an air spring damper may be designed in a more simplistic and compact manner, thereby not necessarily requiring additional supporting equipment. As such, the overall costs related to the operation can be also reduced.

Preferably, the linear motor is configured to actively and/or passively damp vibrations of the first air spring member.

Active damping of the vibrations can be performed by reading out forces exercised on and/or movement of the air spring-damper and by controlling the linear motor in such a way that these forces and/or movement are counteracted.

Passive damping of the vibrations can occur by movement of the rotor inducing eddy currents in the stator, wherein the eddy currents create magnetic fields that exert an opposing force on the rotor. This opposing force may dampen the vibrations.

The linear motor control strategy can be adapted based on the desired technical function of the damper. It can change from damping the system to providing force for body control or even handling dynamics.

In this way, an improved damping functionality can be provided. For example, by combining active and passive damping, the damper may have a faster response and may also be more accurate.

Preferably, the first air spring member and the damper are connected in parallel. It is to be understood, that the first air spring member and the damper are functionally connected in parallel. In other words, the spring and the damper may be connected in parallel to one another as in a Kevin-Voigt model.

According to the invention, the damper defines a second air spring volume. The second air spring volume is in fluid connection to the first air spring volume, through an air opening of the damper.

In other words, the air spring-damper comprises an air spring with a first air spring member and a second air spring member defined by and/or within the damper. In other words, the linear motor form a damper and a second air spring member of the air spring.

The second air spring-volume of the damper being in fluid connection with the first air spring volume of the first air spring member can integrate the damper and the first air spring member more effectively. Since there is no air sealing between the damper and the first air spring member as the air opening allows a clear flow between the different air spring volumes, the total volume used for the air spring feature is significantly increased. In this way, it is not necessary to provide a separate air spring piston. Thus, without having to increase the overall size dimensions of the first air spring member, the existing internal volume of the damper can be additionally used as the second air spring volume to achieve the desired spring rate characteristics. In this way, the performance of the air spring damper can be improved and its package size can be reduced.

According to the invention, the damper comprises a damper body defining a cavity.

Preferably, the damper body has a generally cylindrical shape. The cavity defines the second air spring volume. The damper body comprises a stator of the linear motor. Additionally, the linear motor comprises a full-body, non-hollow, rotor that is received in the cavity of he damper body and wherein the rotor is linearly movable with respect to the damper body.

A generally cylindrical shape may still comprise a tapered surface as described herein, e.g., with regard to the piston profile. The design allows the functionality of the linear motor to be fully maintained, while the cavity of the damper body can be used as the second air spring volume. The damper body is used to accommodate the stator and the movable rotor of the linear motor. In other words, the damper body may be a support structure that supports the stator of the linear motor. According to the invention, the rotor is provided on a piston rod that is at least partly received by the damper body and is linearly movable within the damper body, such that the rotor is movable along a linear path with respect to the stator. For example, there is a gap or clearance between the stator and the rotor that allows free movement of the rotor with respect to the stator.

In other words, the spaces within the linear motor are used as second air spring volume.

Preferably, the air spring-damper comprises an air feed and the first air spring volume may be in fluid connection to an air feed.

The air feed is used to alter the pressure in the air spring, i.e., first air spring member and/or the damper body to achieve the desired spring characteristics prior to or during the vehicle operation. Preferably, the same air feed can be used to allow air into the air spring, i.e. first air spring member and/or the damper body, as well as to release air from the first air spring member and/or the damper body. The air spring rate is dependent on the pressure which can be controlled by a valve block of an external air system that is fluidly connected to the air feed, which is often already installed in automotive applications. Alternatively, the air spring damper may comprise a separate valve for releasing the air from the air spring, i.e., the first air spring member and/or the damper body. The air feed can be used to set the air spring at a constant air pressure and/or to increase or decrease the air pressure depending on the purpose.

The air spring volumes depends on the spring characteristic required and different properties of the vehicle. For automotive applications, one of the aspects that may influence the volumes would be the mass or load of the vehicle body, which need to be held by the suspension system. Also, the range would differ regarding the vehicle segments, e.g., sedan, sports car, SUV, electric bicycles, motorcycle or a truck, etc. The total air spring volume is relevant for the settings of the spring characteristics. The total air spring volume is a sum of the different air spring volumes of the different air spring members of the air spring-damper, e.g., the sum of the first and second air spring volume. Thus, the size of the first air spring volume can compensate the size of the second air spring volume, and vice versa.

According to the invention, the damper body comprises a top end, a bottom end and a peripheral wall extending from the top end to the bottom end.

Preferably, an air opening or a plurality of openings is provided at the top end.

Preferably, the air opening or the plurality of openings of the damper body has a total and/or combined cross-sectional area between 300 and 400 mm², preferably 340 and 350 mm².

The damper body design and dimensioning depends on many technical aspects in the vehicle suspension system. A simpler damper body would be as described above. The air opening of the damper for the connection with the first air spring member is ideally positioned at the top end for better accessibility. The number and the cross-section of the air openings influence the degree of the fluid connection between the interior of the damper body and the first air spring member.

It is preferred that the first air spring member is located at least partially outside the damper body, preferably at least partially outside and adjacent a peripheral wall of the damper body. For example, at least a part of the first air spring member may surround or encircle at least a part of the damper body. In other words, the first air spring member and the damper body may substantially be concentrically arranged. "Substantially" means that the first spring member and/or the damper body may comprise components and/or structures (e.g. protrusions) that break the rotation symmetry of the concentric arrangement.

Preferably, the first air spring member is configured to expand and contract along the peripheral wall of the damper body.

Preferably, the first air spring member comprises a flexible member. A first end of the flexible member may be attached to the vehicle body and a second end of the flexible member may be attached to an outer circumferential wall of the damper body, preferably at the top end of the damper body. It is to be understood that "attached to a vehicle body" shall include attachments to any parts that are fixed with respect to the vehicle body, e.g., a support member of the air spring-damper.

Preferably, the flexible member is a rolling lobe. The rolling lobe may comprise a first portion that extends from the first end of the rolling lobe on the damper body along the damper body towards the bottom end of the damper body. The rolling may lobe further comprise a second portion and a bent portion between the first portion and the second portion. The second portion of the rolling lobe extends from the bend portion to the second end on the vehicle body. The position of the bent portion depends on the degree of contraction/extraction of the air spring-damper. For example, when the air spring-damper is contracted, the bent portion travels or "rolls" along the rolling lobe towards the second end. I.e., the first portion gets longer and the second portion gets shorter. When the air spring-damper is extracted, the bent portion travels or "rolls" along the rolling lobe towards the first end. I.e., the first portion gets shorter and the second portion gets longer.

In other words, the peripheral wall of the damper may be used as an effective piston profile for the rolling lobe to expand and contract. Preferably, the outer peripheral wall surface may be appropriately shaped to influence the spring characteristics, e.g., tapered inwards or outwards towards the bottom end of the damper body.

The first air spring member is located at least partially or entirely outside the damper body. Since the expansion of the first air spring member is along the peripheral wall of the damper body, the overall length of the air spring damper can be reduced.

The first air spring member may comprise a support member for being attached to a body of a vehicle, the first air spring member being attached to the support member. Preferably, the support member comprises an air passage for the air feed.

The support member may allow to fixedly attach a piston rod of the damper and/or the first air spring member to the body of the vehicle. Since the support member is fixedly attached to a body of a vehicle, the air feed can have a more stable and firm access point through an air passage on the support member. The attachment of the first air spring member to the support member can be done by clamp or crimp. The piston rod of the damper may be attached to the support member via an isolation bush to reduce Noise Vibration Harshness (NVH) and allow for some coning movement of the piston rod.

Preferably, the first air spring member may be at its one end sealably attached to a peripheral wall of the damper body and/or may be at its other end sealably attached to the support member. The flexible member may be attached to the damper by a fixation member. It is preferred that the fixation member is a clampable sealing bead, a crimp ring, a retainer or a clamp in the damper.

The first air spring member sealably contains and/or encloses the first air spring volume. Therefore, opposed ends of the air spring member are sealingly attached to the damper body and the support member, respectively, by appropriate fixation members, i.e. such that the interior of the first air spring member is sealed from its exterior.

Preferably, the air spring-damper comprises an attachment for attaching the damper or damper body to a wheel suspension. Preferably, the attachment is a damper mounting bush.

The attachment of the damper positions the damper at a configured location and angle with respect to the wheel suspension. The damper mounting bush can be attached to the damper body at the lower end of the damper body.

Preferably, the rotor is connected and/or attached to the support member. Preferably, the rotor is provided on a piston rod, one end of the piston rod being attached to the support member and an opposite end being movably received in the cavity of the damper body. It is preferred that the stator is provided at an interior wall of the damper body, preferably an interior wall of a peripheral surface of the damper body. Preferably, the damper comprises a bearing configured to guide the rotor.

In order to reduce the Noise Vibration Harshness in the vehicle and to allow a coning movement in the rotor or the piston rod as the damper moves up and down through its travel, an isolation bush can be provided to fixate the rotor and/or the piston rod of the rotor to the support member. The stator is positioned inside the interior wall to operate together with the rotor. It is also possible that the damper comprises more than one bearing, preferably two bearings, to guide the rotor. The number of bearings is dependent upon the side loading requirements.

The bump cap is the contact area on the top end of the damper body with the support member, preferably with an additional corresponding bump stop, to compress and stop the damper and the support member from a hard collision. The bump cap can either be a detachable part or part of an end cap of the top end of the damper body. The surface area of the bump cap should be sufficient for the bump stop contact. At the same time, it should not interfere with the air opening of the damper body.

Preferably, the bump cap and/or the bearing(s) of the damper may be configured to allow air to flow between the first air spring volume and the second air spring volume.

Preferably, the air spring-damper comprises at least one air path providing a fluid connection between an upper section and a lower section of the second air spring volume. In other words, the damper and/or the linear motor may be configured to enable a fluid connection between an upper section and a lower section of the second air spring volume through at least one air path. The upper section of the second air spring volume may be located between the rotor and the top end of the damper body. The lower section of the second air spring volume may be located between the rotor and the bottom end of the damper body.

The at least one air path may be located in the stator of the linear motor and/or in the damper body and/or between the stator and the rotor of the linear motor.

According to a non-claimed example, the at least one air path comprises at least one channel, preferably at least five channels, provided in the rotor. More specifically, the channel may be provided in the piston rod, on which the rotor is provided and/or in the rotor itself. The channel may extend in the rotor and/or piston rod along a longitudinal direction of the rotor and/or piston rod, respectively. The channel may extend from an upper portion of the rotor and/or piston rod, which is located adjacent to the upper section of the second air spring volume, to a lower portion of the rotor and/or piston rod, which is located adj acent to the lower section of the second air spring volume. The channel may open out into the upper section of the second air spring volume and the lower section of the second air spring volume, respectively.

Preferably, the at least one air path comprises at least one channel, preferably at least five channels, provided in the stator and/or the damper body. In other words, the channel may be provided in the damper body, on which the rotor is provided and/or in the stator itself. The channel may extend in the stator and/or the damper body along a longitudinal direction of the stator and/or the damper body, respectively. Preferably, the channel may extend along and inside the peripheral wall of the damper body. The channel may extend from an upper portion of the stator and/or damper body, which is located adjacent to the upper section of the second air spring volume, to a lower portion of the stator and/or damper body, which is located adjacent to the lower section of the second air spring volume. The channel may open out into the upper section of the second air spring volume and the lower section of the second air spring volume, respectively.

Preferably, the at least one air path comprises a gap formed between the stator and the rotor of the linear motor. Preferably, the gap is an annular gap located around the rotor.

Preferably, the at least one air path comprises at least one recess, preferably at least five recesses, more preferably by at least one recess formed in the stator and/or the rotor of the linear motor. The at least one recess may be formed on an outer peripheral surface of the rotor and/or on an inner peripheral surface of the stator, respectively. The at least one recess may extend along a longitudinal direction of the rotor and/or stator, respectively. The at least one recess may extend from an upper portion of the stator and/or rotor, which is located adjacent to the upper section of the second air spring volume, to a lower portion of the stator and/or rotor, which is located adjacent to the lower section of the second air spring volume.

The air path can be designed in different manners as described above. The air path inside the damper body or the second air spring volume allows the full length of the damper to be used as internal air volume for the air spring characteristic. The configuration enables the air path to connect the upper section to the lower section of the second air spring volume, thereby removing any potential pressure changes or undesired effects as the damper moves up and down. The cross-section size and the appropriate number of the air paths is designed such that a change in pressure does not occur between the lower and upper sections. Moreover, in this way, the entire volume within the linear motor can be effectively used for the air spring. This may further reduce the package size of the air spring-damper and/or improve the performance of the air spring-damper.

The linear motor, preferably the stator, may comprise one or more permanent magnets.

The inventors have established that the number of magnets is adjusted based on the force requirements to provide optimal performance of the air spring-damper.

The first air spring member and/or the damper may be configured to exert a force to a body of a vehicle.

The linear motor of the damper can provide additional force where required to control the wheel or body motion, e.g., for ride or handling (damping or stability force). Generally, the force applied by the linear motor does not change the spring force unless it alters the position of the piston profile, i.e. wheel movement. The static spring force does not change unless the linear motor is holding at a different position and there is no introduction or removal of air from the system to regulate the pressure. Dynamically, the forces can change in compression and rebound.

A volume of a cavity of the damper may be adjusted to alter the second air spring volume. It is preferred that the second air spring volume is adjusted at a lower section of the damper.

Preferably, the second air spring volume is adjusted by inserting volume packers into the damper. Alternatively, the second air spring volume may be adjusted by a longitudinally movable bottom end of the damper body.

The volume change will be dependent upon the damper size and the required capacity. Each technical application can have different volume requirements. The adjustment can be done either by removing the detachable end cap and inserting a volume packer that still allows the motion of the linear motor through its full travel. Alternatively, an adjustable bottom end cap on the bottom end of the damper body can reduce the air volume. The internal air volume can be tuned more precisely either prior to the operation by the use of volume packers or during the operation by a longitudinally movable bottom end that can be controlled to decrease or increase the internal air volume of the damper. In this way, a variable air spring-damper is provided that may be used for designing and dimensioning an air spring-damper for a specific application. The air pressure within the first air spring member and the damper may be set within a range of 0.5 and 2 N/mm². The pressure is a function of spring size piston profile force requirement and temperature.

The first air spring volume and the second air spring volume are fluidly connected to each other and have the same pressure at all times. The volume of the entire air spring and the pressure of the air within the air spring determine the characteristics of the air spring, which may be adjusted dependent on the load and the desired vehicle dynamics.

The invention further relates to an air spring-damper system for active vehicle suspension comprising at least one air spring-damper as described above and at least one controller to control the linear motors of the at least one air spring-damper, e.g., as described herein. The system preferably comprises two, preferably four, air spring-dampers. Furthermore, the invention relates to a vehicle comprising such air spring-damper system as described herein.

The controller may be a chassis controller. The controller can adjust the behaviour of the linear motor and/or the air pressure of the air spring. Preferably, the controller is further configured to control the engine, e.g., to align the operation of the vehicle suspension and the engine for a smooth active vehicle suspension. The engine control may communicate with the chassis controller for the linear motor to work with respect to the engine or motor characteristics.

The disclosure further relates to a use of a linear motor as a damper of an air spring-damper of an active vehicle suspension, and a use of a cavity of a damper comprising a linear motor as a second air spring volume as an additional air spring volume for the active vehicle suspension, wherein a first air spring member defining a first air spring volume outside of the damper, the first air spring volume being fluidly connected to the additional air spring volume.

The combined use of a linear motor and an air spring-damper comprising a linear motor is a result achieved by the integrative design of the air spring-damper.

The disclosure further relates to a corresponding method for performing an active vehicle suspension using at least one air spring-damper. The air spring-damper may comprise a first air spring member defining a first air spring volume and a damper connected to the first air spring member. The damper preferably comprises a linear motor. Preferably, the method comprises supplying air to the first air spring member; preferably, supplying air to a cavity of the damper; controlling the linear motor for damping the first air spring member and/or to exert a force to a body of a vehicle. Preferably, the air pressure within the air spring member is within a range of 0.5 and 2 N/mm². Preferably, the method may use at least one air spring-damper described above.

The air spring volume is set to a desired spring characteristic by the supply of air and the controller controls the air spring pressure to alter ride height and regulate pressure due to temperature effects. Each spring and damper can be controlled independently of each other. The controller also calculates and outputs the motor force required for damping, body control or handling. The spring rate is determined by the internal pressure, working area and the spring volume. As air is introduced, the volume is changed and the internal pressure on the working area determines the spring rate at the altered ride height. This is also applicable when air is removed. The piston profile changes the rate as the working area changes.

### BRIEF DESCRIPTION OF THE DRAWING

The invention will be described in more detail with reference to the figure below. The figure discloses exemplary embodiments of the invention for illustrational purposes only. In particular, the disclosure provided by the figure is not meant to limit the scope of protection conferred by the invention.
Fig. 1 is a schematic front cross-section view of an air spring damper for active vehicle suspension in accordance with an embodiment of the present invention.
Fig. 2A is a schematic cross-sectional view of an air spring damper, e.g., as seen from a bottom of the damper in accordance with a non-claimed example.
Figs. 2B-2D are schematic cross-sectional views of an air spring damper, e.g., as seen from a bottom of the damper in accordance with some embodiments of the present invention.
Fig. 2E is a schematic front cross section view of an air spring damper for active vehicle suspension in accordance with the embodiment shown in Fig. 2D.

### DETAILED DESCRIPTION

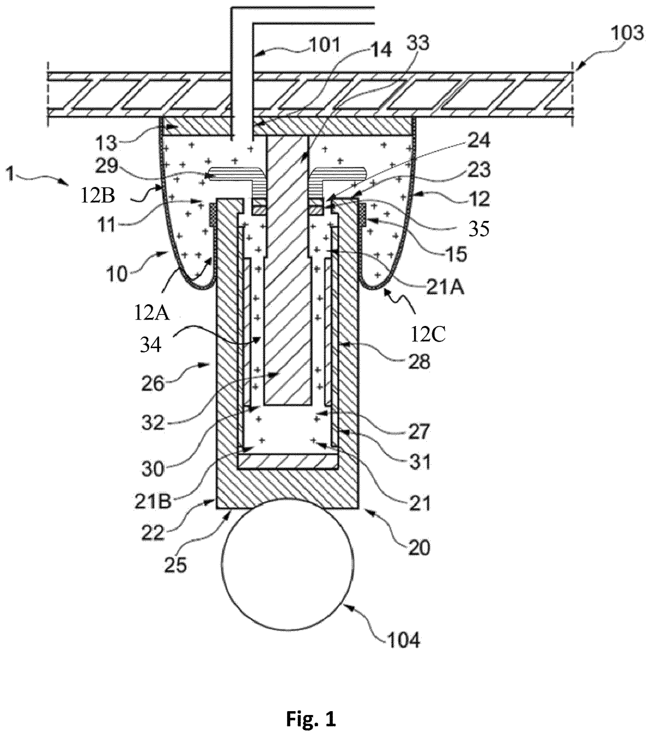

Fig. 1 schematically illustrates an air spring-damper 1 for active vehicle suspension that comprises a first air spring member 10 defining a first air spring volume 11 and a damper 20 connected to the first air spring member 10. The damper 20 comprises a linear motor 30.

The damper 20 is positioned on and/or attached to a damper mounting bush 104 that may be attached to a wheel suspension of a vehicle. The damper body 22 comprises a top end 23, a bottom end 25 and a peripheral wall 26 extending from the top end 23 to the bottom end 25. The damper body forms a cavity 27, which provides a second-air spring volume 21. The linear motor 30 inside damper body 22 comprises a stator 31 that is provided at an interior wall 28 of the damper body 22 and a rotor 32 that is provided on a piston rod 33 movably received in the cavity 27 of the damper body 22. The rotor 32 electromagnetically interacts with the stator 31 and is linearly movable with respect to the damper body 22 and the stator 31, respectively. The volume of the cavity 27 can be adjusted to alter the second air spring volume 21, e.g., by inserting volume packers inside the damper 20. The second air spring volume 21 has an upper section 21A between the rotor 32 and the top end 23 of the damper 20 and a lower section 21B between the rotor 32 and the bottom end 25 of the damper 20 The upper section 21A and the lower section 21B are fluidly connected to each other via at least one air path 34, which can be located within the linear motor 30, e.g., is provided by a plurality of channels formed in the rotor 32. The damper 20 has an air opening 24, which enables the fluid connection between the first air spring volume 11 and the second air spring volume 21. It is possible to have the opening provided at top end 23 of the damper body 22 or at a detachable top end cap. The piston rod 33 extends out of the damper body 22 at its top end 23. An upper end of the rod 33 is attached to a support member 13 and a opposite lower end of the piston rod 33 is movably received in the cavity 27 of the damper body 22. The rotor 32 is provided on the lower end of the piston rod 33. A bump cap 29 configured to prevent collision between the damper and the support member is located at the top end 23 of the damper body 22.

Outside of the damper body 22, the first air spring volume 11 is defined by the first air spring member 10, which is a flexible member 12, preferably a rolling lobe. The first air spring member 10 is sealably attached to a peripheral wall 26 of the damper body 22 by a fixation member 15 at its one end and is sealably attached to the support member 13 at its other end. The first air spring member 10 is positioned on top and partially adjacent to the peripheral wall 26 of the damper body 22 and encircles a part of the damper body 22. The first air spring member 10 is configured to expand and contract along the peripheral wall 26 of the damper body 22 by using the surface as a piston profile. The support member 13 is configured to be attached to a body 103 of a vehicle.

As described in more detail above, the rolling lobe 12 comprises a first portion 12A, a second portion 12B and a bent portion 12C located between the first portion 12A and the second portion 12B. As the first air spring member 10 expands or contracts along the peripheral wall 26 of the damper body 22, the bent portion 12C travels along the rolling lobe 12.

Furthermore, the air spring-damper 1 comprises an external air feed 101 from a valve block of a vehicle air system. The first air spring volume 11 in fluid connection to an air feed 101 and can be supplied with the necessary air from outside to adjust the pressure and the spring rate and/or air can be removed from the first air spring volume 11, wherein the first air spring volume 11 is fluidly connected to the second air spring volume 21. Although it is not shown in Fig. 1, the linear motor 30 can be controlled by a chassis controller, which may also control the air feed.

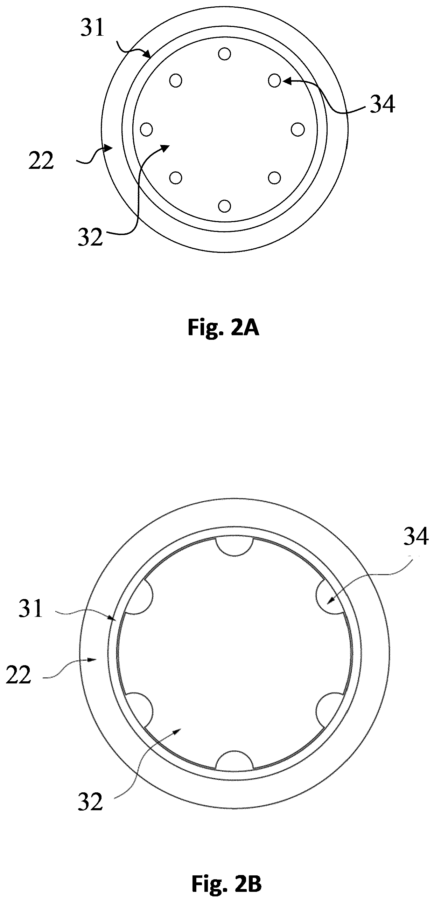

Figs. 2A-2D schematically illustrates the air spring damper 1 in a cross-section made in the middle of the damper 20, i.e., between the upper section 21A and the lower section 21B of the second air spring volume, the cross-section being perpendicular to the longitudinal extension of the damper 20, damper body 22 and/or piston rod 33. All these embodiments have the same general assembly shown in Fig. 1, where a stator 31 is provided at an interior wall 28 of a damper body 22 and the rotor 32 is provided in a piston rod 33 that is linearly movable with respect to the damper body 22 and the stator 31. A gap (not illustrated) between the stator 31 and the rotor 32 allows free linear movement of the rotor 32 vis-à-vis the stator 31. However, the non-claimed example shown in Figure 2A and the embodiments shown in Figs. 2B-2D differ in the arrangement of the at least one air path 34, as described further below.

According to Fig. 2A, a non-claimed example, the at least one air path 34 is formed in the rotor 32, e.g. by a plurality of channels formed in the rotor 32 and/or the piston rod 33, respectively.

According to Fig. 2B, the at least one air path 34 is provided between the rotor 32 and the stator 31. According to this exemplary embodiment, a plurality of recesses is formed in the rotor 32.

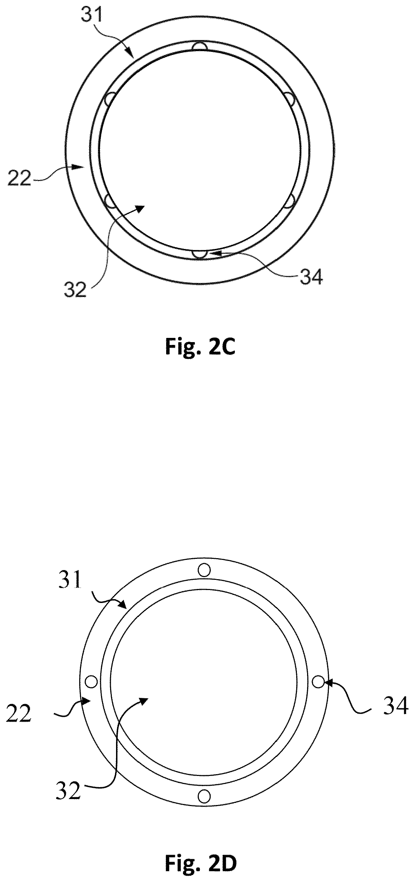

According to Fig. 2C, the at least one air path 34 is provided between the rotor 32 and the stator 31, wherein a plurality of recesses is formed in the stator 31.

The at least one air path 34 can also be formed in the stator 31 and/or by a gap between the stator 31 and the rotor 32.

According to Fig. 2D, the at least one air path 34 is formed in the outer peripheral wall 26 of the damper body 22.

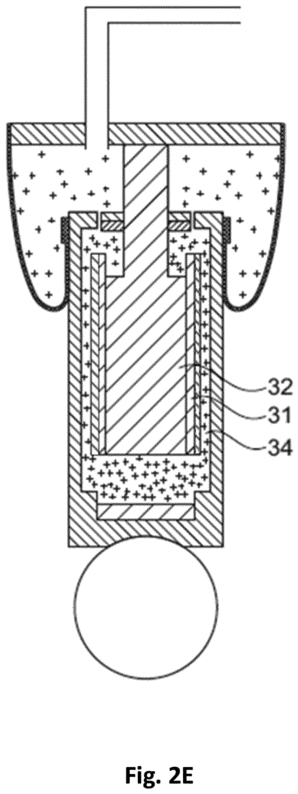

Fig. 2E schematically illustrates the air spring-damper 1 for active vehicle suspension having the same general structure as the air spring-damper of Fig. 1. However, according to Fig. 2E, the at least one air path 34 comprises channels inside the peripheral wall 26 of the damper body 22, thereby enabling the fluid connection between the upper section 21A and the lower section 21B of the second air spring volume 21, as also shown in Fig. 2D.

## Claims

1. Air spring-damper (1) for active vehicle suspension, comprising:
a first air spring member (10) defining a first air spring volume (11), and
a damper (20) connected to the first air spring member (10),
wherein the damper (20) comprises a linear motor (30),
wherein the damper (20) defines a second air spring volume (21), wherein the damper (20) comprises a damper body (22) defining a cavity (27), wherein the cavity (27) defines the second air spring volume (21),
wherein the second air spring volume (21) is in fluid connection to the first air spring volume (11) through an air opening (24) of the damper (20), and
wherein the first air spring volume (11) and the second air spring volume (21) have the same air pressure at all times,
wherein the damper body (22) comprises a top end (23), a bottom end (25) and a peripheral wall (26) extending from the top end (23) to the bottom end (25),
wherein the damper body (22) further comprises a stator (31) of the linear motor (30),
**characterized in that** the linear motor (30) comprises a full-body, non-hollow, rotor (32) that is provided on a piston
rod (33) that is received in the cavity (27) of the damper body (22), and
wherein the rotor (32) is linearly movable with respect to the damper body (22).

2. The air spring-damper (1) according to claim 1,
wherein the air spring-damper (1) comprises a valve for releasing the air from the first air spring member (10).

3. The air spring-damper (1) according to claim 1,
wherein the air spring-damper (1) comprises an air feed (101), and
wherein the first air spring volume (11) is in fluid connection to an air feed (101).

4. The air spring-damper (1) according to any one of claims 1 to 3,
wherein the first air spring member (11) is located at least partially outside the damper body (22), preferably at least partially outside and adjacent a peripheral wall (26) of the damper body (22).

5. The air spring-damper (1) according to any one of claims 1 to 4,
wherein the first air spring member (10) is configured to expand and contract along the peripheral wall (26) of the damper body (22), preferably wherein the first air spring member (10) comprises a flexible member, more preferably wherein the flexible member (12) is a rolling lobe.

6. The air spring-damper (1) according to any one of the preceding claims,
wherein the first air spring member (10) comprises a support member (13) for being attached to a body (103) of a vehicle, the first air spring member (10) being attached to the support member (13), and
wherein the first air spring member (10) is at its one end sealably attached to a peripheral wall (26) of the damper body (22) and/or is at its other end sealably attached to the support member (13).

7. The air spring-damper (1) according to claim 6,
wherein the damper (20) comprises a bump cap (29) configured to prevent collision between the damper (20) and the support member (13).

8. The air spring-damper (1) according to claim 7,
wherein the bump cap (29) of the damper (20) is configured to allow air to flow between the first air spring volume (11) and the second air spring volume (21).

9. The air spring-damper (1) according to any one of claims 2 to 8,
wherein the damper (20) comprises at least one air path (34) providing a fluid connection between an upper section (21A) and a lower section (21B) of the second air spring volume (21).

10. The air spring damper (1) according to claim 9, wherein the at least one air path (34) is located in the stator (31) of the linear motor (30) and/or in the damper body (22), preferably along and inside the peripheral wall (26) of the damper body (22).

11. The air spring damper (1) according to any one of claims 9 to 10, wherein the at least one air path (34) is located between the stator (31) and the rotor (32) of the linear motor (30), preferably is provided by at least one recess formed in the stator (31) and/or the rotor (32) of the linear motor (30) and/or a gap formed between the stator (31) and the rotor (32) of the linear motor (30).

12. The air spring-damper (1) according to any one of claims 2 to 11, wherein a volume of a cavity (27) of the damper (20) is configured to be adjusted to alter the second air spring volume (21), preferably wherein the damper (20) is adjusted at a lower section (21B) of the damper (20), more preferably wherein the damper (20) is adjusted by inserting volume packers into the damper (20) and/or by a longitudinally movable bottom end (25) of the damper body (22).

## Patentansprüche

1. Luftfederdämpfer (1) für aktive Fahrzeugaufhängung, der Folgendes umfasst:
ein erstes Luftfederelement (10), das ein erstes Luftfedervolumen (11) definiert, und
einen Dämpfer (20), der mit dem ersten Luftfederelement (10) verbunden ist,
wobei der Dämpfer (20) einen Linearmotor (30) umfasst, der Dämpfer (20) ein zweites Luftfedervolumen (21) definiert, wobei der Dämpfer (20) einen Dämpferkörper (22) umfasst, der einen Hohlraum (27) definiert, und der Hohlraum (27) das zweite Luftfedervolumen (21) definiert, das zweite Luftfedervolumen (21) durch eine Luftöffnung (24) des Dämpfers (20) mit dem ersten Luftfedervolumen (11) in Fluidverbindung ist,
in dem ersten Luftfedervolumen (11) und in dem zweiten Luftfedervolumen (21) jederzeit derselbe Luftdruck herrscht,
der Dämpferkörper (22) ein oberes Ende (23), ein unteres Ende (25) und eine Umfangswand (26), die vom oberen Ende (23) zum unteren Ende (25) verläuft, umfasst und
der Dämpferkörper (22) ferner einen Stator (31) des Linearmotors (30) umfasst,
**dadurch gekennzeichnet, dass** der Linearmotor (30) einen nicht hohlen Vollkörperrotor (32) umfasst, der an einer Kolbenstange (33) vorgesehen ist, die in den Hohlraum (27) des Dämpferkörpers (22) aufgenommen ist, und
der Rotor (32) in Bezug auf den Dämpferkörper (22) geradlinig beweglich ist.

2. Luftfederdämpfer (1) nach Anspruch 1,
wobei der Luftfederdämpfer (1) ein Ventil zum Freigeben der Luft aus dem ersten Luftfederelement (10) umfasst.

3. Luftfederdämpfer (1) nach Anspruch 1,
wobei der Luftfederdämpfer (1) eine Luftzuführung (101) umfasst und
das erste Luftfedervolumen (11) mit einer Luftzuführung (101) in Fluidverbindung ist.

4. Luftfederdämpfer (1) nach einem der Ansprüche 1 bis 3,
wobei das erste Luftfederelement (11) mindestens teilweise außerhalb des Dämpferkörpers (22) und bevorzugt mindestens teilweise außerhalb und benachbart zu einer Umfangswand (26) des Dämpferkörpers (22) angeordnet ist.

5. Luftfederdämpfer (1) nach einem der Ansprüche 1 bis 4,
wobei das erste Luftfederelement (10) konfiguriert ist, sich entlang der Umfangswand (26) des Dämpferkörpers (22) auszudehnen und zusammenziehen, das erste Luftfederelement (10) bevorzugt ein flexibles Element umfasst und stärker bevorzugt das flexible Element (12) ein Rollbalg ist.

6. Luftfederdämpfer (1) nach einem der vorhergehenden Ansprüche,
wobei das erste Luftfederelement (10) ein Trägerelement (13) umfasst, um an einem Körper (103) eines Fahrzeugs angebracht zu sein, wobei das erste Luftfederelement (10) am Trägerelement (13) angebracht ist, und
das erste Luftfederelement (10) an einem Ende an einer Umfangswand (26) des Dämpferkörpers (22) abdichtbar angebracht ist und/oder an einem weiteren Ende am Trägerelement (13) abdichtbar angebracht ist.

7. Luftfederdämpfer (1) nach Anspruch 6,
wobei der Dämpfer (20) eine Stoßkappe (29) umfasst, die konfiguriert ist, eine Kollision zwischen dem Dämpfer (20) und dem Trägerelement (13) zu verhindern.

8. Luftfederdämpfer (1) nach Anspruch 7,
wobei die Stoßkappe (29) des Dämpfers (20) konfiguriert ist, zu ermöglichen, dass Luft zwischen dem ersten Luftfedervolumen (11) und dem zweiten Luftfedervolumen (21) strömt.

9. Luftfederdämpfer (1) nach einem der Ansprüche 2 bis 8,
wobei der Dämpfer (20) mindestens einen Luftweg (34) umfasst, der eine Fluidverbindung zwischen einem oberen Abschnitt (21A) und einem unteren Abschnitt (21B) des zweiten Luftfedervolumens (21) bereitstellt.

10. Luftfederdämpfer (1) nach Anspruch 9,
wobei der mindestens eine Luftweg (34) im Stator (31) des Linearmotors (30) und/oder im Dämpferkörper (22) und bevorzugt entlang und in der Umfangswand (26) des Dämpferkörpers (22) angeordnet ist.

11. Luftfederdämpfer (1) nach einem der Ansprüche 9 bis 10,
wobei der mindestens eine Luftweg (34) zwischen dem Stator (31) und dem Rotor (32) des Linearmotors (30) angeordnet ist und bevorzugt durch mindestens eine Aussparung vorgesehen ist, die in dem Stator (31) und/oder dem Rotor (32) des Linearmotors (30) und/oder einer Lücke, die zwischen dem Stator (31) und dem Rotor (32) des Linearmotors (30) gebildet ist, gebildet ist.

12. Luftfederdämpfer (1) nach einem der Ansprüche 2 bis 11,
wobei ein Volumen eines Hohlraums (27) des Dämpfers (20) konfiguriert ist, angepasst zu werden, um das zweite Luftfedervolumen (21) zu ändern, wobei der Dämpfer (20) bevorzugt bei einem unteren Abschnitt (21B) des Dämpfers (20) angepasst wird und stärker bevorzugt der Dämpfer (20) durch Einsetzen von Volumenpackern in den Dämpfer (20) und/oder durch ein in Längsrichtung bewegliches unteres Ende (25) des Dämpferkörpers (22) angepasst wird.

## Revendications

1. Ressort amortisseur pneumatique (1) pour une suspension active de véhicule, comprenant :
un premier élément du ressort pneumatique (10) définissant un premier volume du ressort pneumatique (11), et
un amortisseur (20) rattaché au premier élément du ressort pneumatique (10),
cet amortisseur (20) comportant un moteur linéaire (30),
cet amortisseur (20) définissant un deuxième volume de ressort pneumatique (21), cet amortisseur (20) comportant un corps d'amortisseur (22) définissant une cavité (27), cette cavité (27) définissant le deuxième volume du ressort pneumatique (21),
le deuxième volume du ressort pneumatique (21) étant en communication fluidique avec le premier volume du ressort pneumatique (11) au moyen d'une ouverture d'air (24) de l'amortisseur (20), et
le premier volume du ressort pneumatique (11) et le deuxième volume du ressort pneumatique (21) ayant tout le temps la même pression d'air,
le corps de l'amortisseur (22) comportant une extrémité supérieure (23), une extrémité inférieure (25) et une paroi périphérique (26) s'étendant depuis l'extrémité supérieure (23) jusqu'à l'extrémité inférieure (25),
le corps de l'amortisseur (22) comportant en outre un stator (31) du moteur linéaire (30),
**caractérisé en ce que** le moteur linéaire (30) comporte un rotor plein-corps non creux (32) qui est prévu sur une tige de piston (33) qui est reçue dans la cavité (27) du corps de l'amortisseur (22), et **en ce que**
le rotor (32) est capable de se déplacer linéairement par rapport au corps de l'amortisseur (22).

2. Ressort amortisseur pneumatique (1) selon la revendication 1,
ce ressort amortisseur pneumatique (1) comportant une soupape pour libérer l'air du premier élément du ressort pneumatique (10).

3. Ressort amortisseur pneumatique (1) selon la revendication 1,
ce ressort amortisseur pneumatique (1) comportant une alimentation en air (101), et
le premier volume du ressort pneumatique (11) étant en communication fluidique avec une alimentation en air (101).

4. Ressort amortisseur pneumatique (1) selon l'une quelconque des revendications 1 à 3,
dans lequel le premier élément du ressort pneumatique (11) est situé au moins partiellement à l'extérieur du corps de l'amortisseur (22), de préférence au moins partiellement à l'extérieur d'une paroi périphérique (26) du corps de l'amortisseur (22) et adjacent à celle-ci.

5. Ressort amortisseur pneumatique (1) selon l'une quelconque des revendications 1 à 4,
dans lequel le premier élément du ressort pneumatique (10) est configuré de façon à se dilater et se contracter le long de la paroi périphérique (26) du corps de l'amortisseur (22), de préférence dans lequel le premier élément du ressort pneumatique (10) comporte un élément flexible, mieux encore dans lequel cet élément flexible (12) est un lobe roulant.

6. Ressort amortisseur pneumatique (1) selon l'une quelconque des revendications précédentes,
dans lequel le premier élément du ressort pneumatique (10) comporte un élément de support (13) pour lui permettre d'être attaché à une carrosserie (103) d'un véhicule, le premier élément du ressort pneumatique (10) étant attaché à l'élément de support (13), et
dans lequel le premier élément du ressort pneumatique (10) est fixé de manière étanche, à une extrémité, à une paroi périphérique (26) du corps de l'amortisseur (22) et/ou est fixé de manière étanche, à son autre extrémité, à l'élément de support (13).

7. Ressort amortisseur pneumatique (1) selon la revendication 6,
dans lequel l'amortisseur (20) comporte un capuchon anti-heurts (29) configuré de façon à empêcher toute collision entre l'amortisseur (20) et l'élément de support (13).

8. Ressort amortisseur pneumatique (1) selon la revendication 7,
dans lequel le capuchon anti-heurts (29) de l'amortisseur (20) est configuré de façon à permettre à l'air de s'écouler entre le premier volume du ressort pneumatique (11) et le deuxième volume du ressort pneumatique (21).

9. Ressort amortisseur pneumatique (1) selon l'une quelconque des revendications 2 à 8,
dans lequel l'amortisseur (20) comporte au moins un passage d'air (34) fournissant une communication fluidique entre une section supérieure (21A) et une section inférieure (21B) du deuxième volume du ressort pneumatique (21).

10. Ressort amortisseur pneumatique (1) selon la revendication 9,
dans lequel l'au moins un passage d'air (34) est situé dans le stator (31) du moteur linéaire (30) et/ou dans le corps de l'amortisseur (22), de préférence le long et à l'intérieur de la paroi périphérique (26) du corps de l'amortisseur (22).

11. Ressort amortisseur pneumatique (1) selon l'une quelconque des revendications 9 à 10,
dans lequel l'au moins un passage d'air (34) est situé entre le stator (31) et le rotor (32) du moteur linéaire (30), est obtenu de préférence au moyen d'un évidement formé dans le stator (31) et/ou le rotor (32) du moteur linéaire (30) et/ou au moyen d'un espace formé entre le stator (31) et le rotor (32) du moteur linéaire (30).

12. Ressort amortisseur pneumatique (1) selon l'une quelconque des revendications 2 à 11,
dans lequel un volume d'une cavité (27) de l'amortisseur (20) est configuré de façon à être réglé afin de modifier le deuxième volume du ressort pneumatique (21), de préférence dans lequel l'amortisseur (20) est réglé au niveau d'une section inférieure (21B) de l'amortisseur (20), mieux encore dans lequel l'amortisseur (20) est réglé en insérant des bourres de volume dans l'amortisseur (20) et/ou au moyen d'une extrémité inférieure capable de se déplacer longitudinalement (25) du corps de l'amortisseur (22).
